## Europäisches Patentamt

## European Patent Office

## Office européen des brevets

(19)

(11) **EP 0 706 817 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(51) Int Cl.⁷: $B01D\ 53/94$, $B01J\ 21/12$, $B01J\ 21/16$, $B01J\ 23/40$, $B01J\ 23/56$, $B01J\ 35/10$

(21) Anmeldenummer: **95115382.4**

(22) Anmeldetag: **29.09.1995**

(54) **Verfahren zur gleichzeitigen Verminderung der im Abgas einer Verbrennungskraftmaschine enthaltenen Kohlenwasserstoffe, Kohlenmonoxid und Stickoxide**

Process for the simultaneous reduction of hydrocarbons, carbon monoxide and nitrogen oxides occurring in the exhaust gas of an internal combustion engine

Procédé pour la réduction simultanée d'hydrocarbures, d'oxyde de carbone et d'oxides d'azote dans le gaz d'échappement d'un moteur à combustion interne

(84) Benannte Vertragsstaaten:
**BE DE DK ES FR GB IT LU NL**

(30) Priorität: **15.10.1994 DE 4436890**

(43) Veröffentlichungstag der Anmeldung:
**17.04.1996 Patentblatt 1996/16**

(73) Patentinhaber: **OMG AG & Co. KG**
**63457 Hanau (DE)**

(72) Erfinder:
• **Leyrer, Jürgen, Dr.**
**D-63796 Kahl am Main (DE)**
• **Domesle, Rainer, Dr.**
**D-63755 Alzenau (DE)**
• **Lox, Egbert, Dr.**
**D-63457 Hanau (DE)**
• **Ostgathe, Klaus**
**D-65795 Hattersheim (DE)**

(74) Vertreter: **Stellbrink, Axel et al**
**Vossius & Partner**
**Siebertstrasse 4**
**81675 München (DE)**

(56) Entgegenhaltungen:
**EP-A- 0 060 740 EP-A- 0 559 021**
**DE-A- 4 239 875 US-A- 5 275 997**

**Beschreibung**

Die Erfindung betrifft ein Verfahren zur gleichzeitigen Verminderung der im Abgas einer Verbrennungskraftmaschine enthaltenen Kohlenwasserstoffe, Kohlenmonoxid und Stickoxide durch Leiten der Abgase über einen Katalysator, aus einem gasdurchlässigen inerten Tragkörper mit katalytisch aktiver Beschichtung, welche mindestens ein hochoberflächiges Trägermaterial sowie gegebenenfalls ein oder mehrere Unedelmetallverbindungen und mindestens ein Metall aus der Platingruppe enthält.

Zur gleichzeitigen Beseitigung der Schadstoffe im Abgas von Verbrennungskraftmaschinen müssen Kohlenwasserstoffe und Kohlenmonoxid oxidiert und gleichzeitig die Stickoxide reduziert werden. Diese sich widersprechenden Forderungen sind nur mit sogenannten Dreiweg-Katalysatoren zu erfüllen bei gleichzeitiger Regelung des normierten Luft-Kraftstoff-Verhältnisses Lambda auf einen Wert nahe um 1 herum. Das normierte Luft-Kraftstoff-Verhältnis Lambda ist definiert als die tatsächlich benötigte Luftmenge für 1 kg Kraftstoff zu der Luftmenge für eine stöchiometrische Verbrennung des Kraftstoffes. Nur bei Lambda-Werten nahe um 1 können mit Dreiweg-Katalysatoren Konversionsgrade für alle drei Schadstoffarten nahe oder größer als 90 % erzielt werden.

Die EP 0 060 740 A1 beschreibt einen Dreiweg-Katalysator, welcher auf einem monolithischen Träger eine aktive Phase aufweist, die Cer, Eisen, Gallium und/oder Yttrium sowie wenigstens ein Metall aus der Gruppe Platin und Palladium und wenigstens ein Metall aus der Gruppe Iridium und Rhodium auf einem Trägermaterial enthält. Als Trägermaterial können Siliziumdioxid, Aluminiumoxid, Aluminiumsilikate und Mischoxide zwischen Aluminiumoxid und Siliziumdioxid, Zirkonoxid, Ceroxid und/oder Titanoxid verwendet werden. Mit diesem Katalysator werden stöchiometrisch zusammengesetzte Abgase von Kraftfahrzeugmotoren behandelt.

Die US 5,275,997 beschreibt ebenfalls einen Dreiweg-Katalysator, der ein Sauerstoffionen leitendes Komposit-Trägermaterial auf der Basis von mit Yttriumoxid, Calciumoxid, Magnesiumoxid oder Scandiumoxid stabilisiertem Zirkonoxid enthält, welches nach thermischer Alterung an Luft bei 1000 °C für die Dauer von vier Stunden noch wenigstens eine spezifischen Oberfläche von 20 $m^2$/g aufweist. Darüber hinaus enthält der Katalysator wenigstens 40 Gew.-% inertes Katalysator-Trägermaterial und wenigstens zwei aktive Metalle, die auf dem Komposit-Trägermaterial abgeschieden sind. Dieser Katalysator wird für die Reinigung stöchiometrisch zusammengesetzter Abgase eingesetzt.

Die DE 42 39 875 A1 befaßt sich ebenfalls mit der Reinigung von stöchiometrisch betriebenen Verbrennungsmotoren. Zur Verminderung von Kohlenwasserstoff-Emissionen während des Kaltstarts wird ein Kohlenwasserstoffabsorber auf der Basis von Zeolithen eingesetzt, der die Kohlenwasserstoffe während des Kaltstarts absorbiert und nach übeschreiten einer Abgastemperatur von 150 bis 200 °C die Kohlenwasserstoffe wieder an das Abgas abgibt.

Für moderne Motoren mit Benzin und/oder Gasbetrieb, z. B. sogenannte Magermotoren, gibt es Entwicklungskonzepte, die zwecks Kraftstoffeinsparung mit normierten Luft-Kraftstoff-Verhältnissen größer als 1, d. h. mit einem Luft und somit einem Sauerstoffüberschuß arbeiten. Dieser Sauerstoff-Überschuß findet sich auch im Abgas wieder.

Das Abgas von Magermotoren weist während der überwiegenden Betriebsdauer eines normalen Fahrbetriebes einen Anteil von Sauerstoff im Abgas von größer als 1 Vol.% auf. Dieser sogenannte "magere" Betrieb kann während relativ kurzer Beschleunigungsphasen in den "fetten" bzw. stöchiometrischen Betrieb mit Kraftstoffüberschuß überwechseln. In ihrer Betriebsweise ähneln Magermotoren somit Dieselmotoren, deren Abgas ebenfalls gewöhnlich über 1 Vol.% Sauerstoff enthält.

Die bekannten Abgasreinigungsverfahren erlauben unter mageren Abgasbedingungen lediglich, die im Abgas enthaltenen Kohlenwasserstoffe und Kohlenmonoxid durch Oxidation mit Hilfe eines Oxidationskatalysators zu Wasser und Kohlendioxid zu konvertieren. Dabei besteht die Gefahr, daß auch das im Abgas enthaltene Stickstoffmonoxid teilweise durch Oxidation in das umweltschädlichere Stickstoffdioxid überführt wird. Weiterhin besteht die Gefahr, daß das ebenfalls im Abgas vorhandene Schwefeldioxid zu dem umweltschädlicheren Schwefeltrioxid aufoxidiert wird. Zur Vermeidung dieser unerwünschten Oxidationen wurden spezielle Katalysatorformulierungen entwickelt.

So beschreibt zum Beispiel die DE 39 40 758 C2 einen Katalysator zur oxidativen Reinigung der Abgase von Dieselmotoren mit hoher Konversionsleistung für Kohlenwasserstoffe und Kohlenmonoxid bei niedrigen Temperaturen und gehemmter Oxidationswirkung gegenüber Stickstoffmonoxid und Schwefeldioxid. Dieser Katalysator enthält auf den frei durchströmbaren Kanälen eines monolithischen wabenförmigen inerten Tragkörpers aus Keramik oder Metall eine katalytisch aktive Beschichtung, welche aus feinteiligem, hochoberflächigem Aluminiumoxid, Titanoxid und/oder Siliziumdioxid besteht.

Als hochoberflächiges Trägermaterial wird im Rahmen dieser Erfindung ein Material verstanden, dessen spezifische Oberfläche (zu bestimmen gemäß DIN 66132 nach der Methode von Brunauer, Emmet und Teller; BET-Oberfläche) größer als 10 $m^2$/g ist.

Diese feinteiligen, hochoberflächigen Stoffe müssen temperaturstabil sein, um zu verhindern, daß unter den Betriebstemperaturen des Katalysators sich die spezifische Oberfläche der Materialien wesentlich verringert und damit die katalytische Aktivität des Katalysators abnimmt. Ausreichend temperaturstabil sind solche Stoffe, die auch nach mehrstündiger Temperaturbeaufschlagung bei Temperaturen von mindestens 700°C noch als hochoberflächig gelten können.

Auf die feinteiligen, hochoberflächigen Stoffe aus der DE 39 40 758 C2 sind als katalytisch aktive Komponenten Platin und/oder Palladium sowie eine Vanadiumkomponente abgeschieden. Die Vanadiumkomponente verhindert bei diesem Katalysator weitgehend die Weiteroxidation von Stickstoffmonoxid und Schwefeldioxid. Mit diesem Katalysator werden die Kohlenwasserstoffe und Kohlenmonoxid mit guter Effektivität in unschädliche Komponenten konvertiert. Eine Reduktion der Stickoxide zu Stickstoff findet jedoch nicht statt. Stickstoffmonoxid und Schwefeldioxid passieren den Katalysator nahezu unverändert.

Die EP 0 559 021 A2 beschreibt einen Katalysator für die Stickoxidverminderung im mageren Abgas von Kraftfahrzeugmotoren. Der Katalysator enthält auf einem strukturverstärkenden Körper zwei katalytisch aktive Schichten. Die erste Katalysatorschicht enthält eine Mischung eines hochoberflächigen, gegebenenfalls mit Seltenen Erdmetallen und/oder Siliziumdioxid, stabilisierten Aluminiumoxids und/oder Ceroxids als Träger für katalytisch aktive Edelmetallkomponenten. Die Edelmetallkomponenten sind Iridium und Platin im Gewichtsverhältnis von 1:10 bis 10:1. Die auf der ersten Katlysatorschicht befindliche zweite Katalysatorschicht enthält einen Kupfer und/oder Eisen enthaltenden Zeolithen vom Mordenit-Typ. Dieser Katalysator ist auf Grund seines zweischichtigen Aufbaus relativ aufwendig und teuer in der Fertigung.

Aufgabe der vorliegenden Erfindung ist es deshalb, ein Verfahren anzugeben, welches es gestattet, die im Abgas von Verbrennungskraftmaschinen enthaltenen Kohlenwasserstoffe, Kohlenmonoxid und Stickoxide mit Hilfe eines einfach aufgebauten, einschichtigen Katalysators gleichzeitig zu vermindern.

Diese Aufgabe wird gelöst durch ein Verfahren zur gleichzeitigen Verminderung der im Abgas einer Verbrennungskraftmaschine enthaltenen Kohlenwasserstoffe, sauerstoffhaltigen, organischen Verbindungen, Kohlenmonoxid und Stickoxide durch Leiten des Abgases über einen Katalysator aus einem gasdurchlässigen inerten Tragkörper mit katalytisch aktiver Beschichtung, welche als hochoberflächiges Trägermaterial mindestens ein Aluminiumsilikat sowie gegebenenfalls eine oder mehrere Unedelmetallverbindungen und mindestens ein Metall aus der Platingruppe enthält, wobei das Abgas der Verbrennungskraftmaschine während der überwiegenden Betriebsdauer einen Sauerstoffüberschuß aufweist. Das Verfahren ist dadurch gekennzeichnet, daß das hochoberflächige Trägermaterial ein Aluminiumsilikat mit 0,5 bis 70 Gew.-% Siliziumdioxid enthält, welches eine spezifische Oberfläche von mindestens 150 $m^2$/g aufweist.

Wesentlich für das erfindungsgemäße Verfahren ist die Verwendung eines hochtemperaturstabilen Aluminiumsilikates mit einer homogenen Elementverteilung von Aluminium und Silizium, wobei es sich dabei nicht um Zeolithe handelt. Das erfindungsgemäß zu verwendende Aluminumsilikat weist auch nach 7-stündigem Calcinieren bei 950° C in einem synthetischen Abgas aus 10 Vol.-% Kohlendioxid, 6 Vol.-% Sauerstoff, 10 Vol-% Wasserdampf, Rest Stickstoff, noch eine spezifische Oberfläche von mindestens 150 $m^2$/g auf.

Untersuchungen mittels Röntgenbeugung zeigen für derartige Aluminiumsilikate z. B. die Kristallstruktur von Aluminiumoxid der Übergangsreihe, wie γ-Aluminiumoxid, auf. Die ebenfalls, gegebenenfalls in Mischung mit Aluminiumsilikat, einsetzbaren Vorstufen des Aluminiumsilikates können z.B.die Kristallstruktur von Böhmit aufweisen. Daneben enthalten derartige Aluminiumsilikate bzw. deren Vorstufen amorphe, d. h. röntgenographisch nicht genau bestimmbare, Anteile, die mit dem Siliziumdioxidgehalt ansteigen. Die Vorstufen des Aluminiumsilikates werden spätestens bei den Abgastemperaturen einer Verbrennungskraftmaschine in das erfindungsgemäße Aluminiumsilikat überführt.

Diese Materialien können gegebenenfalls homogen eingebrachte, hochtemperaturstabile Oxide bildende Elemente enthalten. Geeignete Elemente stellen zum Beispiel die Seltenen Erden wie Lanthan und Cer sowie Zirkon und die Erdalkalimetalle dar, die in Form geeigneter Vorläuferverbindungen eingebracht werden. Bevorzugt sind Gehalte an diesen Elementen bis 10 Gew.-% berechnet als Oxid.

Ungünstig haben sich höhere Alkalimetallgehalte wie zum Beispiel von Natrium erwiesen. Gut geeignete Aluminiumsilikate weisen einen Gehalt an Natrium, berechnet als Oxid, von weniger als 75 ppm auf.

Die benötigte homogene Elementverteilung, zumindest zwischen Aluminium und Silizium kann nicht durch übliche Verfahren zur Stabilisierung von Aluminiumoxid erhalten werden. Auch physikalische Mischungen aus Aluminiumoxid und Siliziumdioxid sind für das erfindungsgemäße Verfahren ungeeignet.

Ein besonders geeignetes Aluminiumsilikat wird in der Patentschrift DE 38 39 580 C1 beschrieben. Gemäß dieser Patentschrift wird das Aluminiumsilikat durch Vermischen einer Aluminiumverbindung mit einer Kieselsäureverbindung in wäßrigem Milieu, Trocknen sowie gegebenenfalls Calcinieren des Produktes erhalten. Als Aluminiumverbindung wird ein $C_2$ - $C_{20}$ Aluminiumalkoholat verwendet, das mit über Ionenaustauschern gereinigtem Wasser dehydrolysiert wird.

Dem Hydrolysewasser werden 0,1 - 5,0 Gew.-% einer über Ionenaustauscher gereinigten Orthokieselsäurelösung zugesetzt. Alternativ kann dem durch neutrale Hydrolyse gewonnenen Tonerde/Wasser-Gemisch eine 0,1 - 5,0 Gew.-%ige über Ionenaustauscher gereinigte Orthokieselsäure zugesetzt werden. Dieses besonders geeignete Aluminiumsilikat kann Zusätze von Lanthanoxid oder auch andere Seltenerdoxide enthalten.

Als weitere hochoberflächige Trägermaterialien können neben Aluminiumsilikat oder dessen Vorläuferverbindungen (z.B. Hydroxid) noch andere hochoberflächige Stoffe wie Siliziumdioxid, Titanoxid, Zirkonoxid, temperaturstabile Zeolithe, Aluminiumoxid, Magnesiumoxid oder Mischungen davon oder deren Vorläuferverbindungen wie zum Beispiel deren Hydroxoverbindungen enthalten sein. Diese Stoffe werden zum Beispiel eingesetzt, um die Verarbeitbarkeit des Aluminiumsilikates bei seiner Aufbringung auf den Trägerkörper zu verbessern. Weiterhin können sie zum Beispiel in Form eines Sols die Haftfestigkeit des Aluminiumsilikates auf dem Trägerkörper erhöhen oder auch der Einstellung einer geeigneten Porosität der Beschichtung dienen. Zu diesem Zweck werden sie üblicherweise in Mengen von bis zu 50 Gew.-%, bevorzugt bis zu 25 Gew.-%, bezogen auf das Gewicht der Beschichtung, eingesetzt.

Für das erfindungsgemäße Verfahren ist es vorteilhaft, wenn die katalytisch aktive Beschichtung des Katalysators als Unedelmetallverbindungen ein oder mehrere nichtflüchtige Verbindungen, bevorzugt als Oxide, von Molybdän, Wolfram, Vanadium, Zirkon, Hafnium, Germanium, Mangan, Eisen, Nickel, Cobalt, Zink, Kupfer und Silber den Alkali- und Erdalkalimetallen sowie Seltenen Erden enthält. Bevorzugt werden Vanadium- und/oder Wolframoxid verwendet, wenn es gilt, die Weiteroxidation von Schwefeldioxid zu Schwefeltrioxid bei der Abgasreinigung zu unterdrükken. Im Falle der Reinigung von Abgasen mit erhöhtem $SO_2$-Gehalt, wie zum Beispiel Dieselmotorabgasen, führt dies auch zu einer Verminderung der Partikelemission, die ansonsten durch die Bildung von Sulfaten gefördert würde. Verbindungen sulfidbildender Elemente wie Eisen, Nickel, Calcium, Strontium und Barium finden zur Unterdrückung der $H_2S$-Emission beim Übergang von magerer zu fetter Betriebsweise Verwendung. Mittels Alkali- und auch Erdalkalimetallverbindungen kann die $NO_x$-Konvertierung des erfindungsgemäßen Katalysators weiter gesteigert werden.

Die Menge der auf dem Trägerkörper aufgebrachten katalytisch aktiven Beschichtung orientiert sich an der Art und an der geometrischen Oberfläche des Trägerkörpers, die zum Auftrag der.Beschichtung zur Verfügung steht. Bevorzugt liegt die katalytisch aktive Beschichtung auf dem Tragkörper in einer Menge von 20 bis 400 g/l Tragkörpervolumen vor. Sie enthält 0,01 bis 25 g/l Platingruppenmetalle und gegebenenfalls bis 100 g/l Unedelmetallverbindungen (berechnet als Oxid). Bevorzugt werden Platin, Palladium, Rhodium und Iridium aus der Gruppe der Platinmetalle und als Unedelmetallverbindungen Vanadiumoxid und/oder Wolframoxid für den Katalysator verwendet, wobei insbesondere Platin und Palladium gute Ergebnisse zeigen.

Üblicherweise liegen bei hohen Beschichtungskonzentrationen auf dem Tragkörper auch hohe Konzentrationen an Platingruppenmetallen und Unedelmetallverbindungen vor. Bevorzugt besteht ein Verhältnis von der Gesamtmenge der katalytisch aktiven Beschichtung zu der Menge an Platingruppenmetallen bzw. zu der gegebenenfalls anwesenden Menge an Unedelmetallverbindungen (gerechnet als Oxid) von kleiner 500.

Als Tragkörper für die katalytisch aktive Beschichtung eignen sich besonders wabenförmige Monolithe aus Keramik oder Metall in beliebiger Ausführung. Aber auch Filterkörper für die Filterung von Dieselabgasen aus Schaumkeramiken oder sogenannte Wandflußfilter in Form von Wabenkörpern mit wechselseitig verstopften Abgaskanälen können als Tragkörper verwendet werden.

Bevorzugt werden jedoch Monolithe mit frei durchströmbaren Abgaskanälen eingesetzt, wobei die Dichte der Abgaskanäle über den Querschnitt der Monolithe (gewöhnlich als Zelldichte bezeichnet) zwischen 7 und 200 cm$^{-2}$ liegt und die Wandungen der Kanäle eine Dicke je nach Zelldichte und Material des Monolithen zwischen 0,02 und 0,3 mm aufweisen.

Der für das erfindungsgemäße Verfahren benötigte Katalysator kann auf verschiedenartige Weise hergestellt werden. Gewöhnlich wird zunächst eine wäßrige Dispersion mit hohem Feststoffgehalt angesetzt, die das Aluminiumsilikat bzw. dessen Vorstufen sowie gegebenenfalls mindestens eine weitere hochoberflächige Komponente und gegebenenfalls Unedelmetallverbindungen enthält. Der inerte Tragkörper für den Katalysator wird in an sich bekannter Weise mit dieser Dispersion beschichtet. Dies kann zum Beispiel durch ein- oder mehrmaliges Eintauchen des inerten Tragkörpers in die wäßrige Dispersion mit anschließendem Freiblasen der eventuell verstopften Abgasströmungskanäle erfolgen. Alternativ kann die wäßrige Dispersion zur Beschichtung des Tragkörpers auch in diesen hineingepumpt oder hineingesaugt werden.

Auf diese Weise wird der Tragkörper mit feinteiligem Aluminiumsilikat und gegebenenfalls den weiteren Komponenten beschichtet. Anschließend wird die Beschichtung getrocknet. Dies kann entweder bei Raumtemperatur oder bei erhöhter Temperatur bis etwa 200° C erfolgen. An die Trocknung schließt sich meist eine Calcinierung bei Temperaturen oberhalb 250, vorzugsweise zwischen 300 und 800° C an. Die auf diese Weise erzeugte Beschichtung kann danach mit Hilfe von löslichen Vorläuferverbindungen der Platingruppenmetalle imprägniert werden. Die so erhaltene Katalysatorvorstufe wird erneut getrocknet. Danach können die Vorstufen der Platinmetalle in üblicher Weise bei erhöhten Temperaturen bis ca. 800° C gegebenenfalls in einem Wasserstoff enthaltenen Gasstrom calciniert werden. Anschließend kann der Katalysator noch durch Imprägnieren mit Vorstufen der Unedelmetallverbindungen oder diesen selbst belegt werden. An diese erneute Imprägnierung schließt sich zumindest eine Trocknung sowie gegebenenfalls die Zersetzung der Vorstufen der Unedelmetallverbindungen bei erhöhten Temperaturen an. Gegebenenfalls können die löslichen Vorläuferverbindungen der Platingruppenmetalle und die löslichen Unedelmetallverbindungen in einem einzigen Imprägnierschritt aufgebracht werden.

Alternativ zum oben beschriebenen Herstellungsablauf können die Unedelmetallverbindungen auch nach der Beschichtung des Tragkörpers und vor dem Aufbringen der Platingruppenmetalle eingebracht werden. Grundsätzlich kann der erfindungsgemäß zu verwendende Katalysator, wie die vorstehenden Ausführungen zeigen, auf vielfältige Weise hergestellt werden, wobei die Anzahl der Imprägnierschritte aus wirtschaftlichen Gründen auf wenige Schritte beschränkt bleiben sollte. Bevorzugt ist ein Herstellverfahren bei dem alle Komponenten der katalytischen Beschichtung in einer Dispersion vorliegen und gemeinsam auf den Tragkörper aufgebracht werden. Sofern Unedelmetallverbindungen in der Dispersion vorliegen, können sie in gelöster und/oder ungelöster Form darin vorhanden sein.

Als Vorstufe für die Platingruppen-Metalle sind alle gebräuchlichen Salze und Komplexsalze derselben geeignet. Beispiele für solche Verbindungen sind Hexachloroplatinsäure, Tetrachloroplatinsäure, Diammindinitroplatin (II),Tetraamminplatin(II) -chlorid, Ammoniumtetrachloroplatinat(II), Ammoniumhexachlöroplatinat(IV), Platinethylendiamindichlorid, Tetraamminplatin(II)-Nitrat, Tetraamminplatin(II)-Hydroxid, -Hydroxid, Platinnitrat, Palladiumchlorid, Palladiumnitrat, Diariunindinitropalladium(II), Tetraamminpalladium(II)-Hydroxid -Hydroxid und Hexachloroiridiumsäure.

Zur Einbringung der wichtigen Unedelmetallkomponente Vanadin eignen sich alle wasserlöslichen oder teilweise wasserlöslichen Vanadinverbindungen wie Kaliummetavanadat, Natriummetavanadat und Vanadiumpentoxid oder Vorläuferverbindungen wie Vanadyloxalat, Vanadylformiat und Ammoniummetavanadat. Letztere werden durch Temperaturbehandlung der Katalylsatorvorstufe in Vanadiumpentoxid überführt. Zur Einbringung von Wolfram eignen sich Ammoniummetawolframat, Ammoniumparawolframat, Wolframtrioxid, Natriumwolframat und Wolframsäure. Andere Unedelmetalle wie Nickel, Eisen und Cer können als Oxide, die Alkali- und Erdalkalimetalle gut als Salze von organischen Säuren zum Beispiel als Acetate eingebracht werden.

Für eine hohe Konversionsrate der Stickoxide erweist sich ein Dispersionsgrad $D_{PM}$ der Platingruppenmetalle am frischen Katalysator (Engler et al., Applied Catalysis, 48 (1989) 71 - 92) zwischen etwa 30 und 70 % als vorteilhaft. Aber auch abweichende Dispersionsgrade führen je nach Zusammensetzung des Katalysators noch zu befriedigenden Ergebnissen.

Der Dispersionsgrad $D_{PM}$ im Rahmen dieser Erfindung bezeichnet das Verhältnis der experimentell durch CO-Chemisorption bestimmten Metalloberfläche zur theoretisch möglichen Metalloberfläche bei vollständiger Dispersion des Metalls in Form einer Monolage $D_{PM}$ = 100 %.

Das erfindungsgemäße Verfahren zeichnet sich gegenüber dem aus dem Stand der Technik bekannten Verfahren nach der DE 39 40 758 C2 dadurch aus, daß bei etwa gleichbleibenden Konversionsraten für Kohlenwasserstoffe und Kohlenmonoxid und etwa gleichbleibender gehemmter Oxidationswirkung gegenüber Schwefeldioxid eine zusätzliche deutliche Verminderung der Stickoxide, speziell von Stickstoffmonoxid, erzielt wird. Darüber hinaus werden durch das Verfahren deutlich verbesserte Konvertierungsraten für sauerstoffhaltige organische Verbindungen wie zum Beispiel Alkoholen und Aldehyden erhalten.

Das erfindungsgemäße Verfahren ist in der Lage, Stickstoffmonoxid im Abgas von Dieselmotoren oder mager betriebenen Otto-Motoren selbst bei Sauerstoffgehalten im Abgas von bis zu 12 Vol.% mit Konversionsraten je nach Katalysatorformulierung und Raumgeschwindigkeiten von 50 000 h$^{-1}$ bis zu 60 % in unschädlichen Stickstoff zu konvertieren. Bei niedrigeren Raumgeschwindigkeiten steigt die Konversionsrate für die Stickoxide entsprechend an. Dies ist ein bedeutender Fortschritt gegenüber den aus dem Stand der Technik bekannten Verfahren, die bisher allenfalls in der Lage waren, eine Weiteroxidation des Stickstoffmonoxids zu Stickstoffdioxid zu verhindern. Eine Reduktion des Stickstoffmonoxids zu Stickstoff, wie sie das jetzt vorliegende erfindungsgemäße Verfahren ermöglicht, war mit den aus dem Stand der Technik bekannten Verfahren bisher nicht realisierbar.

Diese wesentliche Verbesserung im Abgasreinigungsverhalten wurde durch die Verwendung des temperaturstabilen Aluminiumsilikates oder seiner Vorläuferverbindungen als Träger für die katalytisch aktiven Komponenten möglich. Beide Stoffe zeichnen sich durch eine weitgehend gleichmäßige Elementverteilung von Aluminium und Silizium aus. Das erfindungsgemäß zu verwendende Aluminiumsilikat unterscheidet sich somit grundlegend von der in der DE 39 40 758 C2 vorgeschlagenen Mischung aus diskreten Aluminiumoxid- und Siliziumdioxidpartikeln. Mit dieser rein physikalischen Mischung ist eine Verminderung des Stickstoffoxidgehaltes im sauerstoffhaltigen Abgas nicht möglich.

Die folgenden Beispiele sollen die vorteilhaften Eigenschaften des erfindungsgemäßen Abgasreinigungsverfahrens verdeutlichen.

**Vergleichsbeispiel 1**

Analog zur DE 39 40 758 C2 wurde ein Vergleichskatalysator mit einer physikalischen Mischung aus Aluminiumoxid und Siliziumdioxid als Trägeroxide für die katalytisch aktiven Komponenten hergestellt.

Zu diesem Zweck wurde eine wäßrige Beschichtungsdispersion aus Aluminiumoxid und Siliziumdioxid mit einem Feststoffgehalt von 40 Gew.-% angesetzt. Der Feststoffanteil der Dispersion bestand zu 95 Gew.-% aus γ-Aluminiumoxid mit einer spezifischen Oberfläche von 180 m$^2$/g und zu 5 Gew.-% aus Siliziumdioxid mit einer spezifischen Oberfläche von 100 m$^2$/g.

Als Katalysatorträger wurde ein wabenförmiger, offenzelliger Tragkörper aus Cordierit mit 2,5 cm Durchmesser, 7,6 cm Länge, 62 Zellen beziehungsweise Strömungskanälen/cm$^2$ und einer Wandstärke der Strömungskanäle von 0,2 mm verwendet. Dieser Tragkörper wurde durch Eintauchen in die Beschichtungsdispersion mit der Aluminiumoxid/Siliziumdioxid-Mischung -Mischung in einer Menge von 200 g Oxiden/Liter Tragkorpervolumen beschichtet. Die Beschichtung wurde bei 120° C an Luft getrocknet. Nach einer weiteren 2-stündigen Temperung bei 300° C wurde der beschichtete Tragkörper mit einer wäßrigen Lösung von Tetraamminplatin(II)-hydroxid -hydroxid imprägniert. Nach einer erneuten Trocknung bei 150° C und einer zweistündigen Temperung bei 300° C wurde die Platinverbindung in einem Formiergasstrom (95 Vol.% $N_2$ und 5 Vol.% $H_2$) bei 500° C für die Dauer von 2 h reduziert. Der fertige Katalysator enthielt 1,76 g Platin/Liter Tragkörpervolumen.

**Vergleichsbeispiel 2**

Ein Katalysator nach Vergleichsbeispiel 1 wurde nachträglich mit 5 g Vanadiumpentoxid pro Liter Tragkörpervolumen belegt. Dazu wurde der Katalysator in einer Lösung von Vanadyloxalat getränkt, bei 120° C getrocknet und 2 Stunden bei 400° C zur Zersetzung des Vanadyloxalats calciniert.

Für die folgenden erfindungsgemäßen Beispiele B1 - B37 wurden Tragkörper aus Cordierit mit den gleichen Abmessungen wie im Vergleichsbeispiel 1 mit verschieden zusammengesetzten Aluminiumsilikaten beschichtet. Die Eigenschaften der verwendeten Aluminiumsilikate sind in Tabelle 1 aufgeführt.

Die letzten beiden Spalten von Tabelle 1 geben die nach DIN 66132 durch Stickstoffadsorption gemessene spezifische Oberfläche nach Brunauer, Emmett und Teller (BET-Oberfläche) für den Frischzustand des Materials und nach Alterung in einem synthetischen Abgas für die Dauer von 7 Stunden bei 950° C wieder. Das synthetische Abgas setzte sich aus 10 Vol.-% Kohlendioxid, 6 Vol.-% Sauerstoff, 10 Vol.-% Wasserdampf, Rest Stickstoff zusammen.

Während die erfindungsgemäß zu verwendenden Aluminiumsilikate auch nach Alterung noch eine BET-Oberfläche oberhalb von 150 m$^2$/g aufweisen, verringert sich die spezifische Oberfläche der physikalischen Mischung aus Aluminiumoxid und Siliziumdioxid nach den Vergleichsbeispielen V1 und V2 auf nur 95 m$^2$/g. Die erfindungsgemäß zu verwendenden Aluminiumsilikate weisen also eine wesentlich höhere Oberflächenstabilität auf.

**Vergleichsbeispiel 3**

Ein Siliziumdioxid enthaltendes Aluminiumoxid wurde hergestellt, indem ein γ-Aluminiumoxid (spezifische Oberfläche 180 m$^2$/g) gemäß EP 0 184 506 mit einer Menge Tetraethoxisilan imprägniert wurde, die für einen 5 %igen Siliziumdioxidgehalt des Aluminiumoxids ausgelegt war. Danach wurde das imprägnierte Aluminiumoxid bei 120°C getrocknet und anschließend 1 Stunde bei 500° C calciniert. Mit diesem Material wurde ein Katalysator entsprechend Vergleichsbeispiel 1 hergestellt.

Tabelle 1

| Beispiel | Al$_2$O$_3$-Gehalt [Gew.-%] | SiO$_2$-Gehalt [Gew.-%] | BET-Oberfl. im Frischzust. [m$^2$/g] | BET-Oberfl. nach Alterung [m$^2$/g] |
|---|---|---|---|---|
| V1 - V2 | 95[1] | 5[1] | 175 | 95 |
| V3 | 95[2] | 5[2] | 171 | 127 |
| B 1 - 18 | 95 | 5 | 286 | 235 |
| B 19 | 98,5 | 1,5 | 200 | 159 |
| B 20 | 90 | 10 | 333 | 224 |
| B 21 | 80 | 20 | 374 | 265 |
| B 22 | 70 | 30 | 407 | 270 |
| B 23 | 60 | 40 | 432 | 271 |
| B 24 - 37 | 95 | 5 | 286 | 235 |

1) als physikalische Mischung

2) SiO$_2$ als Kieselsol nach EP 0 184 506 eingebracht

**Beispiel 1**

Es wurde eine wäßrige Dispersion eines Aluminiumsilikates mit 5 Gew.-% Siliziumdioxid und einer spezifischen Oberfläche von 286 m$^2$/g (Condea, Siralox 5/320) angesetzt. Der Cordierit-Tragkörper wurde wie in Vergleichsbeispiel 1 beschrieben mit 200 g Oxid/Liter Tragkörpervolumen beschichtet. Die anschließende Imprägnierung und Fertigstellung des Katalysators wurde wie im Vergleichsbeispiel 1 vorgenommen. Die Zusammensetzung dieses Katalysators und aller Katalysatoren der folgenden Beispiele sind in Tabelle 2 aufgelistet.

### Beispiele 2 - 4

Die Katalysatoren nach Beispiel 1 wurden nach der Reduktion im Formiergasstrom mit verschieden konzentrierten wäßrigen Lösungen von Vanadyloxalat imprägniert und bei 120° C getrocknet. Die Zersetzung von Vanadyloxalat zu Vanadiumpentoxid erfolgte während einer zweistündigen Temperung bei 300° C.

### Beispiele 5 und 6

Es wurden zwei Katalysatoren analog zu Beispiel 1 mit 140 bzw. 100 g Aluminiumsilikat/Liter Tragkörpervolumen hergestellt.

### Beispiele 7 und 8

Es wurden zwei Katalysatoren analog zu Beispiel 2 mit 140 bzw. 100 g Aluminiumsilikat/Liter Tragkörpervolumen hergestellt.

### Beispiel 9

Ein Katalysator nach Beispiel 1 wurde statt mit Platin mit Palladium imprägniert. Als Imprägnierlösung diente eine wäßrige Lösung von Palladiumnitrat.

### Beispiel 10

Ein Katalysator nach Beispiel 1 wurde mit Hexachloroplatinsäure als Platinvorstufe imprägniert und anstelle der Reduktion im Formiergasstrom einer vierstündigen Temperung bei 300° C an Luft mit einem Wasserdampfgehalt von 10 Vol.-% unterworfen.

### Beispiel 11

Ein Katalysator nach Beispiel 1 wurde statt mit Tetraaminplatin(II)-hydroxid mit einer salzsauren Lösung von Rhodiumchlorid imprägniert.

### Beispiel 12

Ein Katalysator nach Beispiel 1 wurde anstelle von Platin mit einer Mischung aus Platin und Iridium im Gewichtsverhältnis von 2 : 1 imprägniert. Als Imprägnierlösung wurde eine wäßrige Lösung aus Hexachloroplatinsäure und Iridiumchlorid eingesetzt.

### Beispiel 13

Ein Katalysator nach Beispiel 1 wurde anstelle von Platin mit einer Mischung aus Platin und Palladium im Gewichtsverhältnis 2 : 1 hergestellt. Als Imprägnierlösung wurde eine wäßrige Lösung von Tetraamminplatin(II)-Hydroxid und Palladiumtetraamminnitrat eingesetzt.

### Beispiel 14

Ein Katalysator nach Beispiel 1 wurde anstelle von Platin mit einer Mischung aus Platin und Rhodium im Gewichtsverhältnis 5 : 1 imprägniert. Als Imprägnierlösung diente eine wäßrige Lösung von Hexachloroplatinsäure und Rhodiumchlorid.

### Beispiele 15 - 17

Es wurden drei Katalysatoren mit 0,88, 0,44 bzw. 0,22 g Platin/Liter Tragkörpervolumen nach Beispiel 1 hergestellt.

### Beispiele 18 - 19

Es wurden Katalysatoren nach Beispiel 1 angefertigt, wobei das erfindungsgemäß einzusetzende Aluminiumsilikat einen Gehalt von 1,5 bzw. 10 Gew.-% an Siliziumdioxid aufwies.

**Beispiele 20 - 22**

Es wurden Katalysatoren nach Beispiel 2 angefertigt, wobei das erfindungsgemäß einzusetzende Aluminiumsilikat einen Gehalt von 20, 30 bzw. 40 Gew.-% an Siliziumdioxid aufwies.

**Beispiel 23**

Ein Katalysator nach Beispiel 1 wurde nachträglich mit Kaliummetavanadat imprägniert, getrocknet und bei 300° C über Nacht calciniert. Die Menge des Kaliummetavanadats wurde so bemessen, daß sie 5 g Vanadiumpentoxid pro Liter Tragkörpervolumen entsprach.

**Beispiel 24**

Zur Herstellung des Katalysators wurde eine Beschichtungsdispersion mit Aluminiumsilikat (Condea, Siralox 5/320) angesetzt und anschließend Hexachloroplatinsäure hinzugefügt. Nach dem Beschichten des Tragkörpers wurde bei 120° C getrocknet, 2 Stunden bei 300° C calciniert und abschließend wie in Beispiel 1 im Formiergasstrom reduziert.

**Beispiel 25**

Ein Katalysator nach Beispiel 24 wurde wie in Beispiel 2 beschrieben mit 3 g Vanadiumpentoxid hergestellt.

**Beispiel 26**

Es wurde ein mit einer Vanadiumkomponente versehener Katalysator wie in Beispiel 24 beschrieben hergestellt, wobei als lösliche Vorstufe der Vanadiumkomponente Vanadyloxalat der Beschichtungsdispersion zugesetzt wurde.

**Beispiel 27**

Ein Katalysator nach Beispiel 26 wurde ohne abschließende Reduktion hergestellt.

**Beispiel 28**

Es wurde ein Katalysator wie in Beispiel 24 hergestellt. Jedoch wurde anstelle des keramischen Tragkörpers aus Cordierit ein ebenfalls offenzelliger wabenförmiger Metalltragkörper mit einem Durchmesser von 2,5 cm, einer Länge von 7,5 cm sowie 62 Zellen beziehungsweise Strömungskanälen/cm$^2$ und einer Wandstärke der Strömungskanäle von 0,04 mm verwendet.

**Beispiel 29**

Ein Katalysator nach Beispiel 2 wurde anstelle von Vanadyloxalat mit Ammoniummetawolframat imprägniert. Der fertige Katalysator enthielt neben 1,76 g Platin noch 10 g Wolframtrioxid pro Liter Tragkörpervolumen.

**Beispiel 30**

Es wurde ein Katalysator nach Beispiel 1 mit einem Lanthanoxid dotierten Aluminiumsilikat (5 Gew.-% SiO$_2$; 1,5 Gew.-% La$_2$O$_3$) hergestellt, welches analog zu Beispiel 7 aus der DE-PS 38 39 580 angefertigt worden war.

**Beispiel 31**

Es wurde ein Katalysator nach Beispiel 1 hergestellt, wobei die Beschichtungsdispersion zusätzlich 5 Gew.-% Siliziumdioxid, bezogen auf den Feststoffgehalt der Dispersion, enthielt. Das zusätzliche Siliziumdioxid hatte eine spezifische Oberfläche von 200 m$^2$/g.

**Beispiel 32**

Es wurde ein Katalysator nach Beispiel 3 hergestellt, wobei der Beschichtungsdispersion zusätzlich ein Zirkonoxidsol in Form eines Zirkonhydroxyacetats enthielt. Der Zirkonoxidgehalt der fertigen Beschichtung betrug 10 Gew.-% bezogen auf den Gesamtoxidgehalt der Beschichtung.

**Beispiel 33**

Es wurde ein Katalysator nach Beispiel 24 hergestellt, wobei nach Zugabe und Sorption der Hexachloroplatinsäure auf dem Aluminiumsilikat als weitere Feststoffkomponente der Beschichtungsdispersion ein mit Kupfer ausgetauschter ZSM5-Zeolith (Molverhältnis $SiO_2 : Al_2O_3 = 45$) zugefügt wurde. Das Gewichtsverhältnis des Aluminiumsilikats zum Zeolithen betrug 80 : 20. Der Zeolith war im Rahmen seiner Austauschkapazität mit 1,1-Gew.-% Kupfer, bezogen auf das Gewicht des Zeolithen, ausgetauscht.

**Beispiel 34**

Es wurde ein Katalysator nach Beispiel 1 hergestellt, wobei die Beschichtungsdispersion zusätzlich 10 Gew.-% Manganoxid (Sedema, Faradizer M), bezogen auf den Feststoffgehalt, enthielt.

**Beispiel 35**

Es wurde ein Katalysator nach Beispiel 9 hergestellt, wobei die Beschichtungsdispersion zusätzlich 15 Gew.-% mit Ceroxid stabilisiertes Zirkonoxid (BET-Oberfläche 52 $m^2/g$) sowie 6 Gew.-% Bariumoxid in Form von Bariumacetat, bezogen auf den Feststoffgehalt, enthielt.

**Beispiel 36**

Es wurde ein Katalysator nach Beispiel 14 hergestellt, wobei die Beschichtungsdispersion zusätzlich 20 Gew.-% mit Zirkonoxid stabilisiertes Ceroxid (spezifische Oberfläche: 85 $m^2/g$) sowie 4 Gew.-% Calciumoxid in Form von Calciumacetat und 2 Gew.-% Kaliumoxid in Form von Kaliumacetat jeweils bezogen auf den Feststoffgehalt der Dispersion enthielt.

**Beispiel 37**

Es wurde ein Katalysator nach Beispiel 17 hergestellt, wobei die Beschichtungsdispersion zusätzlich 15 Gew.-% Silberoxid, eingebracht als Silbernitrat, bezogen auf den Feststoffgehalt, enthielt.

Tabelle 2:

| Zusammensetzung der Katalysatoren | | | | | |
|---|---|---|---|---|---|
| Beispiel | Edel- metall | Edel-metall-gehalt [g/dm$^3$] | $Al_2O_3/SiO_2$-Verhältnis | Aluminiumsilikat Gehalt [g/dm$^3$] | weitere Oxide [g/dm$^3$] |
| V1 | Pt | 1,76 | 95/5[1] | 200 | |
| V2 | Pt | 1,76 | 95/5[1] | 200 | 5   $V_2O_5$ |
| V3 | Pt | 1,76 | 95/5[2] | 200 | |
| B1 | Pt | 1,76 | 95/5 | 200 | |
| B2 | Pt | 1,76 | 95/5 | 200 | 0,5   $V_2O_5$ |
| B3 | Pt | 1,76 | 95/5 | 200 | 5   $V_2O_5$ |
| B4 | Pt | 1,76 | 95/5 | 200 | 10   $V_2O_5$ |
| B5 | Pt | 1,76 | 95/5 | 140 | |
| B6 | Pt | 1,76 | 95/5 | 100 | |
| B7 | Pt | 1,76 | 95/5 | 140 | 1   $V_2O_5$ |

1) als physikalische Mischung aus $Al_2O3$ und $SiO_2$
2) nach EP 0 184 506
3) $V_2O_5$-Gehalt des vorliegenden $KVO_3$
4) $WO_3$-Gehalt

Tabelle 2:   (fortgesetzt)

| Zusammensetzung der Katalysatoren | | | | | |
|---|---|---|---|---|---|
| Beispiel | Edel- metall | Edel-metall-gehalt [g/dm³] | $Al_2O_3/SiO_2$- Verhältnis | Aluminiumsilikat Gehalt [g/dm³] | weitere Oxide [g/dm³] |
| B8 | Pt | 1,76 | 95/5 | 100 | 1   $V_2O_5$ |
| B9 | Pd | 1,76 | 95/5 | 200 | |
| B10 | Pt | 1,76 | 95/5 | 200 | |
| B11 | Rh | 1,76 | 95/5 | 200 | |
| B12 | Pt/Ir 2:1 | 1,76 | 95/5 | 200 | |
| B13 | Pt/Pd 2:1 | 1,76 | 95/5 | 200 | |
| B14 | Pt/Rh 5:1 | 1,76 | 95/5 | 200 | |
| B15 | Pt | 0,88 | 95/5 | 200 | |
| B16 | Pt | 0,44 | 95/5 | 200 | |
| B17 | Pt | 0,22 | 95/5 | 200 | |
| B18 | Pt | 1,76 | 98,5/1,5 | 200 | |
| B19 | Pt | 1,76 | 90/10 | 200 | |
| B20 | Pt | 1,76 | 80/20 | 200 | 1   $V_2O_5$ |
| B21 | Pt | 1,76 | 70/30 | 200 | 1   $V_2O_5$ |
| B22 | Pt | 1,76 | 60/40 | 200 | 1   $V_2O_5$ |
| B23 | Pt | 1,76 | 95/5 | 200 | 5   $V_2O_5$ |
| B24 | Pt | 1,76 | 95/5 | 200 | |
| B25 | Pt | 1,76 | 95/5 | 200 | |
| B26 | Pt | 1,76 | 95/5 | 200 | |
| B27 | Pt | 1,76 | 95/5 | 200 | |
| B28 | Pt | 1,76 | 95/5 | 200 | |
| B29 | Pt | 1,76 | 95/5 | 200 | 10   $WO_3$ |
| B30 | Pt | 1,76 | 93,5/5 | 200 [5] | |
| B31 | Pt | 1,76 | 95/5 | 200 | 10   $SiO_2$ |
| B32 | Pt | 1,76 | 95/5 | 180 | 20   $ZrO_2$ |
| B33 | Pt | 1,76 | 95/5 | 160 | 40   CU-ZSM5 |
| B34 | Pt | 1,76 | 95/5 | 180 | 20   $MnO_2$ |
| B35 | Pd | 1,76 | 95/5 | 158 | 42   Zr/Ce/Ba |
| B36 | Pt/Rh 5:1 | 1,76 | 95/5 | 148 | 52   Ce/Zr/Ca/K |
| B37 | Pt | 0,22 | 95/5 | 170 | 30   AgO |

[5] mit $La_2O_3$ stabilisiertes Aluminiumsilikat

**Anwendungsbeispiel**

Die katalytische Aktivität der Abgasreinigungskatalysatoren der vorstehenden Beispiele wurde an einer Synthesegastestanlage gemessen. Mit dieser Anlage ist es möglich, alle im realen Abgas eines Diesel- oder Otto-Motors vorhandenen gasförmigen Abgaskomponenten zu simulieren.

Die gewählten Testbedingungen und die Modellgas-Zusammensetzung sind in Tabelle 3 aufgelistet. Zur Messung der im Abgas enthaltenen Gaskomponenten wurden die in Tabelle 4 angegebenen Meßgeräte verwendet.

An der Synthesegas-Testanlage wurden die Anspringtemperaturen der Katalysatoren für die Konversion von Kohlenmonoxid und Kohlenwasserstoffen sowie die im Dauerbetrieb bei Abgastemperaturen von 225° C erzielbaren Konversionsraten für Kohlenmonoxid, Kohlenwasserstoffen und Stickstoffmonoxid und die Oxidation von $SO_2$ zu $SO_3$ bei Abgastemperaturen von 450° C gemessen. Bei den Anspringtemperaturen handelt es sich um diejenigen Abgastemperaturen, bei denen der jeweilige Schadstoff vom Katalysator zu 50 % konvertiert wird. Zur Bestimmung der Anspringtemperaturen wurde das Abgas in Schritten von 25° C erwärmt mit einer Haltezeit nach jedem Schritt von 15 Minuten.

Die Messungen wurden an frischen Katalysatoren als auch nach einer Ofenalterung der Katalysatoren von 16 h bei 750° C an Luft vorgenommen. Die Raumgeschwindigkeit betrug bei allen Messungen 50.000 h⁻¹.

Die Berechnung der Konversionsraten erfolgte mittels folgender Formel

$$X = \frac{N_E - N_A}{N_E} \, 100 \, [\%]$$

X = Konversionsrate [%]
$N_E$ = Konzentration des Schadstoffes vor Katalysator [vppm]
$N_A$ = Konzentration des Schadstoffes nach Katalysator [vppm]

Die mit den Katalysatoren der Vergleichsbeispiele und der Beispiele 1 - 37 im erfindungsgemäßen Verfahren erzielten Schadstoffkonversionen sind in den Tabellen 5 und 6 aufgelistet. In Tabelle 5 handelt es sich um die Leistungsdaten der frischen Katalysatoren, während die Ergebnisse der Tabelle 6 mit Katalysatoren erhalten wurden, die einer Ofenalterung von 16 h bei 750° C an Luft unterworfen worden waren.

Die Konversionsmessungen der Tabellen 5 und 6 zeigen deutlich die Vorteile des erfindungsgemäßen Verfahrens. Bei Verwendung von Aluminiumsilikat als hochoberflächiges Trägeroxid für die katalytisch aktiven Komponenten können neben der Konversion von Kohlenwasserstoffen und Kohlenmonoxid hohe Umsetzungsgrade für Stickstoffmonoxid erzielt werden. Eine physikalische Mischung aus Aluminiumoxid und Siliziumdioxid wie im Vergleichsbeispiel führt dagegen zu nur minimaler Konversion des Stickstoffmonoxids.

Der Manganoxid enthaltende Katalysator nach Beispiel 34 zeigt annähernd gleiche Konversionsraten für die Schadstoffe $NO_x$, CO und HC (Kohlenwasserstoffe) wie der Katalysator nach Beispiel 1, hat aber darüber hinaus den Vorteil, die Freisetzung von übelriechendem Schwefelwasserstoff bei Übergang von magerer zu fetter Betriebsweise weitgehend zu unterdrücken.

Der Katalysator von Beispiel 35 weist im Vergleich zum Katalysator von Beispiel 9 eine verbesserte Tieftemperaturkonversion der Schadstoffe und eine verbesserte Stickoxid-Konversion besonders bei dynamischer Betriebsweise auf.

Der Katalysator von Beispiel 36 zeigt eine gegenüber dem Katalysator von Beispiel 14 nur leicht erhöhte Stickoxid-Konversion auf, führt aber bei dynamischer Betriebsweise für alle drei Schadstoffe zu deutlich verbesserten Konversionsraten.

Der Katalysator von Vergleichsbeispiel 3 besitzt zwar ebenfalls gute Konversionsraten für Kohlenmonoxid und Kohlenwasserstoffe, weist aber erheblich geringere Konversionsraten für Stickoxide als der erfindungsgemäße Katalysator von Beispiel 1 auf.

Der Katalysator von Beispiel 37 zeigt gegenüber dem Katalysator von Beispiel 17 nur eine leicht erniedrigte Stickoxidkonversion, führt aber zu deutlich erhöhten Konversionsraten von sauerstoffhaltigen organischen Verbindungen.

Tabelle 3

| Testbedingungen und Modellgaszusammensetzung zur Bestimmung der Konversionsraten der Schadstoffe CO, HC, $NO_x$ und $SO_2$ in der Synthesegastestanlage | |
|---|---|
| Komponente | Konzentration |
| CO | 350 [vppm] |
| $H_2$ | 117 [vppm] |
| $C_3H_6$ | 800 [vppm] |
| $SO_2$ | 25 [vppm] |
| NO | 270 [vppm] |
| $O_2$ | 6 [Vol.%] |
| $H_2O$ | 10 [Vol.%] |
| $CO_2$ | 10,7 [Vol.%] |
| $N_2$ | Rest |
| Gasmenge | 1950 [Nl/h] |
| Katalysatorgröße | $\varnothing$ 25 mm x 76 mm |
| Raumgeschwindigkeit | 50.000 [$h^{-1}$] |
| Aufheizung | 25° C Schritte Haltezeit: 15 min. |

Tabelle 4

| Zusammenstellung der Meßgeräte zur Messung der Abgaskonzentration am Synthesegasteststand | | |
|---|---|---|
| Analysiertes Gas | Meßgerätebezeichnung | Hersteller |
| $O_2$ | Oxymat | Siemens AG |
| Kohlenwasserstoffe | FID | Pierburg Meßtechnik |
| $NO_x$ | CLD 700 Elht | Zellweger ECO-Systeme |
| CO | Binos | Rosemount |
| $CO_2$ | Binos | Rosemount |
| $SO_2$ | Binos | Rosemount |

Dispersionsgrad der Platingruppenmetalle:

Es wurden die Dispersionsgrade der Platingruppenmetalle der Katalysatoren des Vergleichsbeispiels und einiger ausgewählter Katalysatoren der Beispiele 1 bis 37 gemessen. Die Ergebnisse sind in Tabelle 7 zusammengefaßt. Sie zeigen durch Vergleich mit den Konversionsmessungen von Tabelle 5, daß die Katalysatoren der erfindungsgemäßen Beispiele sich durch einen Dispersionsgrad zwischen 30 und 70 % auszeichnen. Der Katalysator des Vergleichsbeispiels 1 mit nur geringer Stickoxidkonvertierung aus einer physikalischen Mischung von Aluminiumoxid und Siliziumdioxid weist dagegen nur einen Dispersionsgrad von 15 % auf.

Tabelle 5

| Beispiel | $T_{50\%}$ °C | | Konversion [%] bei 225° C | | | $SO_2$ Oxidation bei 450° C |
|---|---|---|---|---|---|---|
| | CO | HC | CO | HC | $NO_x$ | $SO_2$ |
| V1 | 179 | 215 | 89 | 84 | 2 | 69 |
| V2 | 181 | 217 | 88 | 83 | 1 | 18 |
| V3 | 175 | 245 | 75 | 80 | 0 | 5 |
| B1 | 155 | 210 | 95 | 90 | 55 | 45 |
| B2 | 155 | 215 | 95 | 90 | 55 | 30 |
| B3 | 160 | 218 | 95 | 90 | 55 | 21 |
| B4 | 160 | 220 | 94 | 89 | 53 | 15 |
| B5 | 150 | 210 | 94 | 89 | 58 | 45 |
| B6 | 150 | 211 | 95 | 91 | 58 | 46 |
| B7 | 152 | 210 | 95 | 91 | 54 | 29 |
| B8 | 153 | 212 | 93 | 90 | 55 | 32 |
| B9 | 285 | 265 | 25 | 38 | 15 | 35 |
| B10 | 150 | 208 | 95 | 89 | 60 | 45 |
| B11 | 175 | 215 | 95 | 91 | 50 | 40 |
| B12 | 185 | 225 | 90 | 87 | 48 | 45 |
| B13 | 175 | 218 | 89 | 89 | 25 | 41 |
| B14 | 170 | 217 | 90 | 90 | 47 | 80 |
| B15 | 165 | 220 | 90 | 90 | 45 | 35 |
| B16 | 165 | 225 | 90 | 89 | 20 | 20 |
| B17 | 171 | 227 | 85 | 85 | 10 | 19 |
| B18 | 160 | 210 | 93 | 90 | 35 | 40 |
| B19 | 161 | 211 | 95 | 91 | 55 | 40 |
| B20 | 159 | 209 | 94 | 89 | 50 | 42 |
| B21 | 163 | 210 | 93 | 90 | 45 | 38 |
| B22 | 162 | 209 | 94 | 91 | 40 | 39 |
| B23 | 157 | 215 | 95 | 89 | 54 | 31 |
| B24 | 151 | 214 | 91 | 90 | 53 | 41 |

Tabelle 5   (fortgesetzt)

| Schadstoffkonversion durch die Katalysatoren der Beispiele B1 - B37 und V1-V3 im erfindungsgemäßen Verfahren | | | | | | |
|---|---|---|---|---|---|---|
| Beispiel | $T_{50\%}$ ° C | | Konversion [%] bei 225° C | | | $SO_2$ Oxidation bei 450° C |
| | CO | HC | CO | HC | $NO_x$ | $SO_2$ |
| B25 | 155 | 220 | 89 | 87 | 50 | 28 |
| B26 | 155 | 221 | 89 | 89 | 40 | 24 |
| B27 | 165 | 230 | 86 | 87 | 38 | 23 |
| B28 | 145 | 205 | 95 | 91 | 59 | 42 |
| B29 | 150 | 209 | 93 | 90 | 51 | 22 |
| B30 | 153 | 215 | 90 | 86 | 35 | 40 |
| B31 | 155 | 218 | 93 | 90 | 55 | 45 |
| B32 | 155 | 215 | 90 | 90 | 40 | 29 |
| B33 | 151 | 207 | 92 | 91 | 48 | 49 |
| B34 | 155 | 215 | 89 | 85 | 49 | 38 |
| B35 | 150 | 210 | 94 | 90 | 30 | 50 |
| B36 | 175 | 221 | 89 | 88 | 49 | 25 |
| B37 | 175 | 230 | 85 | 85 | 9 | 17 |

Tabelle 6

| Schadstoffkonversion durch die Katalysatoren von ausgewählten Beispielen nach Ofenalterung (16 h, 750° C, Luft) | | | | | | |
|---|---|---|---|---|---|---|
| Beispiel | $T_{50\%}$° C | | Konversion [%] bei 225° C | | | $SO_2$-Oxidation bei 450° C |
| | CO | HC | CO | HC | NOX | $SO_2$ |
| B1 | 165 | 221 | 90 | 90 | 50 | 21 |
| B2 | 168 | 225 | 90 | 86 | 50 | 15 |
| B4 | 175 | 228 | 85 | 83 | 48 | 9 |
| B5 | 163 | 221 | 89 | 87 | 50 | 22 |
| B6 | 165 | 225 | 86 | 86 | 45 | 25 |
| B8 | 165 | 220 | 91 | 89 | 52 | 19 |
| B15 | 170 | 229 | 85 | 90 | 40 | 17 |
| B16 | 175 | 235 | 84 | 80 | 10 | 10 |
| B17 | 185 | 255 | 85 | 65 | 5 | 10 |
| B18 | 170 | 225 | 90 | 88 | 25 | 22 |
| B20 | 170 | 220 | 91 | 88 | 48 | 25 |
| B22 | 171 | 219 | 90 | 89 | 37 | 20 |
| B26 | 170 | 230 | 87 | 85 | 35 | 11 |

Tabelle 7

| Dispersionsgrade der Platingruppenmetalle der Katalysatoren einiger ausgewählter Beispiele | |
|---|---|
| Beispiel | Dispersionsgrad $D_{pM}$ [%] |
| B1 | 63 |
| B2 | 55 |
| B4 | 56 |
| B10 | 50 |
| B18 | 51 |
| B22 | 35 |
| V1 | 15 |

**Patentansprüche**

1. Verfahren zur gleichzeitigen Verminderung der im Abgas einer Verbrennungskraftmaschine enthaltenen Kohlenwasserstoffe, sauerstoffhaltigen, organischen Verbindungen, Kohlenmonoxid und Stickoxide durch Leiten des Abgases über einen Katalysator aus einem gasdurchlässigen, inerten Tragkörper mit katalytisch aktiver Beschichtung, welche als hochoberflächiges Trägermaterial mindestens ein Aluminiumsilikat sowie gegebenenfalls eine oder mehrere Unedelmetallverbindungen und mindestens ein Metall aus der Platingruppe enthält, wobei das Abgas der Verbrennungskraftmaschine während der überwiegenden Betriebsdauer einen Sauerstoffüberschuß aufweist,
   **dadurch gekennzeichnet,**
   **daß** das hochoberflächige Trägermaterial ein Aluminiumsilikat mit 0,5 bis 70 Gew.-% Siliziumdioxid enthält, welches eine spezifische Oberfläche von mindestens 150 m$^2$/g aufweist.

2. Verfahren nach Anspruch 1,
   **dadurch gekennzeichnet,**
   **daß** das Aluminiumsilikat weiterhin mindestens ein homogen eingebrachtes, ein hochtemperaturstabiles Oxid bildendes Element aus der Gruppe der Seltenen Erden, Erdalkalimetalle und Zirkon enthält.

3. Verfahren nach Anspruch 2,
   **dadurch gekennzeichnet,**
   **daß** es sich bei den Unedelmetallverbindungen um nichtflüchtige Verbindungen von, Molybdän, Wolfram, Vanadium, Zirkon, Hafnium, Germanium, Mangan, Eisen, Nickel, Cobalt, Zink, Kupfer und Silber sowie Alkali-, Erdalkalimetalle und Seltene Erden handelt.

4. Verfahren nach einem der Ansprüchen 1 bis 3,
   **dadurch gekennzeichnet,**
   **daß** die Beschichtung neben Aluminiumsilikat bis zu 50 Gew.-%, bevorzugt bis zu 25 Gew.-%, weitere hochoberflächige Trägermaterialien wie Siliziumdioxid, Titanoxid, Zirkonoxid, Zeolithe, Aluminiumoxid, Magnesiumoxid oder deren Mischungen enthält.

5. Verfahren nach Anspruch 4,
   **dadurch gekennzeichnet,**
   **daß** die katalytisch aktive Beschichtung auf dem Tragkörper in einer Menge von 20 bis 400 g/l Tragkörpervolumen vorliegt und 0,01 bis 5 g/l Platingruppenmetalle und 0 bis 100 g/l Unedelmetallverbindungen, berechnet als Oxid, enthält.

6. Verfahren nach Anspruch 5,
   **dadurch gekennzeichnet,**
   **daß** es sich bei den Platingruppenmetallen um Platin, Palladium, Rhodium und Iridium und bei den Unedelmetallverbindungen um Vanadiumoxid und/oder Wolframoxid handelt.

**Claims**

1. A process for simultaneously reducing the amounts of hydrocarbons, oxygen-containing organic compounds, carbon monoxide and nitrogen oxides contained in the exhaust gas from an internal combustion engine by passing the exhaust gas over a catalyst, made from a gas-permeable inert support structure with a catalytically active coating, which contains at least an aluminium silicate as a high surface area support material and optionally one or more base metal compounds and at least one metal from the platinum group, wherein the exhaust gas from the internal combustion engine contains an excess of oxygen during the greater part of the operational period,
   **characterised in that**
   the high surface area support material contains an aluminium silicate with 0.5 to 70 wt.% of silicon dioxide and has a specific surface area of at least 150 m$^2$/g.

2. A process according to claim 1,
   **characterised in that**
   the aluminium silicate also contains at least one homogeneously incorporated element from the group of rare earths, alkaline earth metals and zirconium which can form an oxide which is stable at elevated temperatures.

**3.** A process according to claim 2,
**characterised in that**
the base metal compounds are non-volatile compounds of molybdenum, tungsten, vanadium, zirconium, hafnium, germanium, manganese, iron, nickel, cobalt, zinc, copper and silver or of alkali metals, alkaline earth metals and rare earths.

**4.** A process according to one of claims 1 to 3,
**characterised in that**
the coating contains, apart from aluminium silicate, up to 50 wt.%, preferably up to 25 wt.%, of other high surface area support materials such as silicon dioxide, titanium oxide, zirconium oxide, zeolites, aluminium oxide, magnesium oxide or mixtures thereof.

**5.** A process according to claim 4,
**characterised in that**
the catalytically active coating is present on the support structure in an amount of 20 to 400 g/l of support structure volume and contains 0.01 to 5 g/l of platinum group metals and 0 to 100 g/l of base metal compounds, calculated as oxide.

**6.** A process according to claim 5,
**characterised in that**
the platinum group metals are platinum, palladium, rhodium and iridium and the base metal compounds are vanadium oxide and/or tungsten oxide.

**Revendications**

**1.** Procédé pour la réduction simultanée d'hydrocarbures, de composés organiques oxygénés d'oxyde de carbone et d'oxydes d'azote dans le gaz d'échappement d'un moteur à combustion interne, par passage des gaz d'échappement dans un pot catalytique constitué par un support inerte, perméable au gaz et garni d'un revêtement à action catalytique, le matériau porteur à grande surface contenant au moins un silicate d'aluminium ainsi qu'éventuellement un ou plusieurs composés de métaux non nobles et au moins un métal du groupe du platine, le gaz d'échappement du moteur présentant un excès d'oxygène pendant la plus grande partie de son temps de fonctionnement,
**caractérisé en ce que**
le matériau support à grande surface est un silicate d'aluminium contenant de 0,5 à 70 % en poids d'oxyde de silicium, avec une surface spécifique d'au moins 150 m$^2$/g.

**2.** Procédé selon la revendication 1,
**caractérisé en ce que**
le silicate d'aluminium contient en plus au moins un élément introduit sous forme homogène, formant un oxyde résistant aux hautes températures et appartenant au groupe des terres rares, ainsi que des métaux alcalino-terreux et du zircon.

**3.** Procédé selon la revendication 2,
**caractérisé en ce qu'**
en ce qui concerne les composés de métaux non nobles, il s'agit de composés non volatiles de molybdène, tungstène, vanadium, zircon, d'hafnium, germanium, manganèse, fer, nickel, cobalt, zinc, cuivre et argent ainsi que des métaux alcalino-terreux et des terres rares.

**4.** Procédé selon l'une quelconque des revendications 1 à 3,
**caractérisé en ce que**
le revêtement contient, en plus du silicate d'aluminium, jusqu'à 50 % en poids, de préférence jusqu'à 25 % en poids, d'autres matériaux supports à grande surface tels que du dioxyde de silicium, de l'oxyde de titane, de l'oxyde de zircon, des zéolithes, de l'oxyde d'aluminium, de l'oxyde de magnésium et des mélanges de ceux-ci.

**5.** Procédé selon la revendication 4,
**caractérisé en ce que**
le revêtement catalytiquement actif est présent sur le corps porteur à un taux de 20 à 400 g/l de volume du corps porteur et il contient de 0,01 à 5 g/l de métaux du groupe du platine et de 0 à 100 g/l de composés de métaux non nobles, évalués en tant qu'oxydes.

6. Procédé selon la revendication 5,
**caractérisé en ce qu'**
en ce qui concerne les métaux du groupe du platine, il s'agit du palladium, du rhodium et de l'iridium, et en ce qui concerne les composés de métaux non nobles, il s'agit de l'oxyde de vanadium et/ou de l'oxyde de tungstène.